# EUROPÄISCHE PATENTSCHRIFT

(11) **EP 0 736 345 B1**
(45) Veröffentlichungstag und Bekanntmachung des Hinweises auf die Patenterteilung: **03.06.1998**
(21) Anmeldenummer: 96810161.8
(22) Anmeldetag: 14.03.1996
(51) Int. Cl.: B21D 19/00, B21B 1/08

(54) **Verfahren zur Herstellung einer Profilschiene**
Method for manufacturing a profiled rail
Procédé de fabrication d'un rail profilé

(30) Priorität: 03.04.1995 DE 19512414
(43) Veröffentlichungstag der Anmeldung: 09.10.1996
(73) Patentinhaber: HILTI Aktiengesellschaft, 9494 Schaan (LI)
(72) Erfinder: Stampfl, Hans, 6807 Feldkirch-Tisis (AT); Hintersteiner, Walter, 3341 Ybbsitz (AT); Höfle, Siegfried, 6840 Götzis (AT)
(74) Vertreter: Wildi, Roland

(56) Entgegenhaltungen:
- EP-A- 0 028 507
- EP-A- 0 507 296
- GB-A- 2 147 838

## Beschreibung

Die Erfindung betrifft ein Verfahren zur Herstellung Von Profilschienen mit C-förmigem Querschnitt, die an ihren nach innen gerichteten Längskanten mit einer Profilierung versehen sind, gemäss dem Oberbegriff des Patentanspruchs 1.

C-förmige Profilschienen dienen der Befestigung von Gegenständen, insbesondere von Rohren an Bauteilen, wobei die Profilschienen in der Regel fest an dem Bauteil angeordnet sind und die Gegenstände mit Schienenmuttern an den Profilschienen befestigt werden. Die in die Profilschienen ragenden Schienenmuttern weisen Profilierungen auf, die der Profilierung der in das Innere der Profilschienen ragenden freien Enden der Längskanten zugewandt sind, so dass beim Festlegen der Schienenmuttern eine formschlüssige, das Verrutschen der Schienenmuttern verhindernde Verbindung zwischen den Profilschienen und den Schienenmuttern erfolgt.

Aus der EP-A-0 028 507 ist ein Verfahren zur Herstellung von C-förmigen Profilschienen bekannt, bei dem die Gesamtbreite eines Blechstreifens durch Rollwalzen seiner beiden Ränder vergrössert wird. Durch anschliessendes Einrollen einer Profilierung in die Längskanten der Ränder mittels profilierter Scheiben wird der Blechstreifen wieder auf seine im wesentlichen ursprüngliche Gesamtbreite zurückgeführt. Nach dem Erzeugen der Profilierung an den Längskanten erfolgt eine Umformung des Blechstreifens zu einer C-förmigen Profilschiene.

Bei diesem bekannten Verfahren unterliegt die äussere Zone des Blechstreifens beim Abkanten der profilierte Längskanten aufweisenden Ränder des Blechstreifens einer grossen Dehnung, so dass ein Verzug der Profilierung statfindet. Der Verzug ist daran erkennbar, dass die Spitzen der Profilierung im Übergangsbereich zur Aussenkontur der Ränder abgerundet sind. Die Profilierung erstreckt sich somit nicht mehr über die gesamte Wandstärke der Ränder. Das Abrunden eines Teils der Profilierung wird zusätzlich aber auch von Scheiben hervorgerufen, die beim Umformen des Blechstreifens zu einem C-förmigen Profil einen hohen Druck auf die Übergangsbereiche zwischen Rändern und Profilierung ausüben und somit eine Materialverformung im Bereich der Spitzen der Profilierung bewirken. Mit der sich nur über einen Teil der Wandstärke der Ränder erstreckenden Profilierung können nur geringe, in Längsrichtung der Profilschienen verlaufende, von den Schienenmuttern bzw. von den befestigten Gegenständen ausgehende Kräfte aufgenommen werden.

Aus der den nächsten Stand der Technik bildenden EP-A-0 507 296 ist ein Verfahren zur Herstellung von Profilschienen mit C-förmigem Querschnitt, die an ihren nach innen gerichteten Längskanten mit einer Profilierung versehen sind, bekannt, bei dem die beiden Ränder eines Blechstreifens mittels Scheiben um einen Winkel abgekantet werden, der deutlich kleiner als 90° ist. Anschliessend wird in die Längskanten der abgekanteten Ränder mittels profilierter Scheiben die Profilierung eingerollt. Danach wird der Blechstreifen in mehreren Schritten zu einer Profilschiene mit C-förmigem Querschnitt umgeformt. Beim Einrollen der Profilierung in die Längskanten erfolgt eine Materialverformung, die beim Eindrücken der erhabensten Bereiche des Profils an den profilierten Scheiben in die Oberfläche der Längskanten hervorgerufen werden. Ein Teil des verdrängten Materials wandert nach aussen, so dass dieses die Wandstärke der Ränder überragt. Dieser Umstand wird noch dadurch verstärkt, dass die Längskanten der abgekanteten Ränder schräg zu den profilierten Rändern angeordnet sind. Dadurch wird in die Längskanten eine Profilierung eingerollt, die eine quer zur Längserstreckung der Ränder abnehmende bzw. zunehmende Tiefe aufweist. Die nach aussen verdrängten Materialbereiche besitzen eine geringe Festigkeit und können nur geringe Kräfte aufnehmen. Ausserdem kann das überstehende Material die Anbindung einer Schienenmutter oder eines Bauteils behindern.

Der Erfindung liegt die Aufgabe zugrunde, ein Verfahren zu schaffen, bei dem eine Beschädigung der auf den Längskanten angeordneten Profilierungen beim Rollwalzen des Blechstreifens zu einer Profilschiene mit C-förmigem Querschnitt verhindert wird.

Erfindungsgemäss wird die Aufgabe dadurch gelöst, dass die beiden Ränder des Blechstreifens mittels Scheiben um im wesentlichen 90° abgekantet werden, und daß nach dem Einrollen der Profilierung die Längskanten der abgekanteten Ränder mittels zweier Kalibrierscheiben wieder auf ihre usprüngliche Wandstärke zurückgeführt, werden.

Speziell bei der Anordnung einer groberen Profilierung mit grösseren Erhebungen bzw. grösseren Vertiefungen ist es vorteilhaft, die Profilierung in mehreren nacheinander erfolgenden Verfahrensschritten herzustellen, da mehr Material verdrängt werden muss. Deshalb wird zweckmässigerweise die Profilierung nach dem Kalibrieren wenigstens ein weiteres Mal in die Längskanten eingerollt.

Damit das Einrollen der Profilierung durch Material, das die Wandstärke der Ränder überragt, nicht behindert wird, erfolgt vorteilhafterweise nach jedem weiteren Einrollen der Profilierung die Kalibrierung der Längskanten ein weiteres Mal.

Um ein Verrutschen der in das Innere der Profilschiene ragenden, festgelegten Schienenmuttem in Längsrichtung der Profilschiene verhindem zu könnnen, ist die an den Schienenmuttem und den Längskanten angeordnete Profilierung vorzugsweise als Verzahnung ausgebildet, deren Zahnscheitel rechtwinklig zur Längserstreckung der Längskanten verlaufen.

Sind für das Einrollen der Profilierung mehrere Verfahrensschritte notwendig, so wird das Einrollen erleichtert, wenn der Querschnitt der Zähne bei den ersten Verfahrensschritten spitzer ist als der Querschnitt der Zähne der fertigen Profilierung.

Damit die Zähne der auf den Längskanten erzeugten Profilierung parallel zueinander verlaufen, ist zweckmässigerweise die Rotation der auf die beiden Längskanten einwirkenden profilierten Scheiben synchronisiert.

Das erfindungsgemässe Verfahren wird anhand von mehreren Zelchnungen, die beispielhaft Verfahrensschritte wiedergeben, näher erläutert. Es zeigen:
- Fig. 1: das erfindungsgemässe Abkanten eines Randes des Blechstreifens;
- Fig. 2: das Einrollen der Profilierung in die Längskante des Randes; gemäss Fig. 1;
- Fig. 3: das Kalibrieren des Randes gemäss den Fig. 1 und 2, im Bereich der Profilierung;
- Fig. 4: das fertige C-förmige Profil

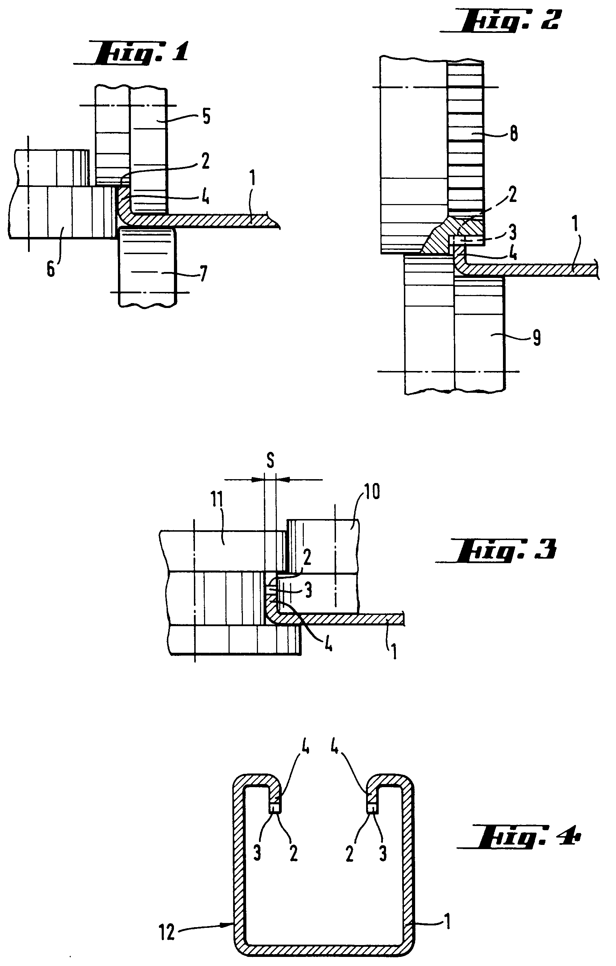

In den Fig. 1 bis 3 ist nur eine Seite des Blechstreifens 1 bzw. eine Seite einer teilweise in Form von einzelnen Scheiben 5, 6, 7, 8, 9, 10, 11 schematisch dargestellten Rollwalzvorrichtung ersichtlich.

Bei den in den Fig. 1 und 2 dargestellten Verfahrensschritten erfolgt gleichzeitig eine Bearbeitung beider Ränder 4 bzw. beider Längskanten 2. Die Bearbeitung der Ränder 4 bzw. der Längskanten 2 erfolgt bei dem in Fig. 3 dargestellten Verfahrensschritt nacheinander.

Beim ersten in Fig. 1 dargestellten Verfahrensschritt werden durch Rollwalzen die beiden Ränder 4 des Blechstreifens 1 mittels Scheiben 5, 6, 7 um im wesentlichen 90° abgekantet, so dass die Längskanten 2 nach oben gerichtet, parallel zur restlichen Hauptebene des Blechstreifens 1 verlaufen.

Das Einrollen einer Profilierung 3 in die Längskanten 2 erfolgt in einem zweiten Verfahrensschritt, der aus der Fig. 2 ersichtlich ist. Erzeugt wird die Profilierung 3 mit Hilfe wenigstens einer profilierten Scheibe 8 pro Längskante 2, die unter Druck auf den Längskanten 2 des Blechstreifens 1 entlangrollen. Auf der gegenüberliegenden Seite des Blechstreifens 1 angeordnete Gegenscheiben 9 bilden für die profilierten Scheiben 8 ein entsprechendes Gegenlager.

Das beim Einrollen der Profilierung 3 durch Materialverformung nach aussen gedrückte Material wird, wie in Fig. 3 dargestellt, mittels Kalibrierscheiben 10, 11 wieder zusammengedrückt, so dass die Ränder 4 bzw. die Längskanten 2 wieder ihre ursprüngliche Wandstärke S erhalten.

Die Fig. 4 zeigt die fertige C.förmige Profilschiene 12, die durch Rollwalzen des Blechstreifens 1 nach dem letztmaligen Kalibrieren entstanden ist. Die beiden Ränder 4 bzw. die beiden Längskanten 2 verlaufen parallel zueinander und ragen in das Innere der Profilschiene 12.

## Patentansprüche

1. Verfahren zur Herstellung von Profilschienen (12) mit C-förmigem Querschnitt, die an ihren nach innen gerichteten Längskanten (2) mit einer Profilierung (3) versehen sind, bei dem durch Rollwalzen die beiden Ränder (4) eines Blechstreifens (1) mittels Scheiben (5, 6, 7) abgekantet werden, anschliessend in die Längskanten (2) der abgekanteten Ränder (4) mittels profilierter Scheiben (8) die Profilierung (3) eingerollt wird und danach der Blechstreifen (1) zu einer Profilschiene (12) mit C-förmigem Querschnitt umgeformt wird, **dadurch gekennzeichnet**, dass die beiden Ränder (4) des Blechstreifens (1) um im wesentlichen 90° abgekantet werden, und dass nach dem Einrollen der Profilierung (3) die Längskanten (2) der abgekanteten Ränder (4) mittels zweier Kalibrierscheiben (10, 11) auf ihre ursprüngliche Wandstärke (S) zurückgeführt werden.

2. Verfahren nach Anspruch 1, dadurch gekennzeichnet, dass die Profilierung (3) nach dem Kalibrieren wenigstens ein weiteres Mal in die Längskanten (2) eingerollt wird.

3. Verfahren nach Anspruch 2, dadurch gekennzeichnet, dass nach jedem weiteren Einrollen der Profilierung (3) die Kalibrierung der Längskanten (2) ein weiteres Mal erfolgt.

4. Verfahren nach einem der Ansprüche 1 bis 3, dadurch gekennzeichnet, dass die eingerollte Profilierung (3) eine Verzahnung ist, deren Zahnscheitel rechtwinklig zur Längserstreckung der Längskanten (2) verlaufen.

5. Verfahren nach einem der Ansprüche 1 bis 4, dadurch gekennzeichnet, dass die Rotation der auf die beiden Längskanten (2) einwirkenden, profilierten Scheiben (8) synchronisiert ist.

## Claims

1. A method of manufacturing shaped rails (12) which have a C-shaped cross-section and which are provided with a contoured formation (3) at their inwardly directed longitudinal edges (2), in which the two borders (4) of a sheet metal strip (1) are folded by rolling by means of discs (5, 6, 7), the contoured formation (3) is subsequently rolled into the longitudinal edges (2) of the folded borders (4) by means of contoured discs (8), and thereafter the sheet metal strip (1) is deformed to form a shaped rail (12) of C-shaped cross-section, **characterised in that** the two borders (4) of the sheet metal strip (1) are folded by substantially 90°, and that after rolling in the contoured formation (3) the longitudinal edges (2) of the folded borders (4) are taken back to their original wall thickness (S) by means of two sizing discs (10, 11).

2. A method according to claim 1, characterised in that the contoured formation (3) is rolled into the longitudinal edges (2) at least once more after sizing.

3. A method according to claim 2, characterised in that sizing of the longitudinal edges (2) is effected a further time after each further rolling-in of the contoured formation (3).

4. A method according to any one of claims 1 to 3, characterised in that the contoured formation (3) which is rolled in is a serration, the tooth tips of which run at right angles to the longitudinal extent of the longitudinal edges (2).

5. A method according to any one of claims 1 to 4, characterised in that the rotation of the contoured discs (8) which act on the two longitudinal edges (2) is synchronised.

## Revendications

1. Procédé de fabrication de rails profilés (12) à section en C qui sont pourvus d'un profilage (3) sur leurs rives longitudinales (2) dirigées vers l'intérieur, dans lequel les deux bords (4) d'une bande de tôle (1) sont repliés par roulage au moyen de molettes (5, 6, 7), le profilage (3) est alors réalisé par roulage dans les rives longitudinales (2) des bords repliés (4) au moyen de molettes profilées (8), et la bande de tôle (1) reçoit ensuite la forme d'un rail profilé (12) à section en C, caractérisé en ce que les deux bords (4) de la bande de tôle (1) sont repliés à environ 90°, et en ce qu'après la réalisation du profilage (3) les rives longitudinales (2) des bords repliés (4) sont ramenées à leur épaisseur de paroi initiale (S) au moyen de deux molettes de calibrage (10, 11).

2. Procédé selon la revendication 1, caractérisé en ce que le profilage (3) est réalisé au moins une nouvelle fois dans les rives longitudinales (2) à l'issue du calibrage.

3. Procédé selon la revendication 2, caractérisé en ce qu'un calibrage des rives longitudinales (2) est effectué une nouvelle fois après chaque nouveau profilage (3).

4. Procédé selon l'une des revendications 1 à 3, caractérisé en ce que le profilage réalisé (3) est une denture dont le sommet des dents est perpendiculaire à l'extension longitudinale des rives longitudinales (2).

5. Procédé selon l'une des revendications 1 à 4, caractérisé en ce que la rotation des molettes profilées (8) agissant sur les deux rives longitudinales (2) est synchronisée.
